**Europäisches Patentamt**

**European Patent Office**

**Office européen des brevets**

(19)

(11) Veröffentlichungsnummer : **0 347 681 B1**

(12) # EUROPÄISCHE PATENTSCHRIFT

(45) Veröffentlichungstag der Patentschrift :
**14.10.92 Patentblatt 92/42**

(51) Int. Cl.⁵ : **C01G 49/02**

(21) Anmeldenummer : **89110531.4**

(22) Anmeldetag : **10.06.89**

(54) **Hitzestabile Eisenoxidschwarz-Pigmente, Verfahren zu ihrer Herstellung sowie deren Verwendung.**

(30) Priorität : **24.06.88 DE 3821341**

(43) Veröffentlichungstag der Anmeldung :
**27.12.89 Patentblatt 89/52**

(45) Bekanntmachung des Hinweises auf die
Patenterteilung :
**14.10.92 Patentblatt 92/42**

(84) Benannte Vertragsstaaten :
**DE FR GB IT**

(56) Entgegenhaltungen :
**EP-A- 0 142 775**
**DE-A- 2 617 569**
**DE-A- 2 919 854**

(56) Entgegenhaltungen :
**SU-A- 1 337 392**
**PATENT ABSTRACTS OF JAPAN Band 2, Nr.**
**81 (C-78)(1013), 28 Juni 1978; & JP - A - 5335697**
**(MATSUSHITA DENKO) 04.03.1978**

(73) Patentinhaber : **BAYER AG**
**W-5090 Leverkusen 1 Bayerwerk (DE)**

(72) Erfinder : **Wiese, Jürgen, Dr.**
**Doerperhofstrasse 39**
**W-4150 Krefeld (DE)**
Erfinder : **Buxbaum, Gunter, Dr.**
**Holzapfelweg 2**
**W-4150 Krefeld (DE)**
Erfinder : **Kresse, Peter, Dr.**
**Deswatinesstrasse 67**
**W-4150 Krefeld (DE)**

EP 0 347 681 B1

## Beschreibung

Die vorliegende Erfindung betrifft neuartige hitzestabile Eisenoxidschwarz-Pigmente, Verfahren zu ihrer Herstellung sowie deren Verwendung.

Pigmente auf Basis von Magnetit ($Fe_3O_4$) mit Teilchengrößen im Bereich von 0,1 bis 2,0 μm haben eine breite Anwendung gefunden. Als schwarze Farbpigmente dienen sie zur Einfärbung von Baustoffen und Lacken. Ihre magnetischen Eigenschaften werden bei Einkomponentonern für Fotokopierer genutzt. Ihre Hitzebeständigkeit wird im allgemeinen als ausreichend beurteilt. Bei Einsatz in unter hydrothermalen Bedingungen aushärtenden Baustoffen findet man jedoch Farbverschiebung nach rot oder braun.

Um optimale Eigenschaften zu erreichen, werden im allgemeinen Pigmente mit möglichst enger Teilchengrößenverteilung benötigt.

Die Herstellung solcher Pigmente ist daher ein wichtiges Entwicklungsziel. Die allgemeinen Verfahren, mit denen solche Pigmente herstellbar sind, sind hinreichend beschrieben.

So wird in der DE-A 900 257 das sogenannte Fällverfahren beschrieben, bei dem Eisen-II-salze in Gegenwart von Alkalien mit Luftsauerstoff zu $Fe_3O_4$-Pigmenten umgesetzt werden.

Eine andere Variante bietet das Zweistufenfällverfahren. Dabei wird, wie in der US-A 2 631 085 ausgeführt, ein Eisen-III-Oxid, bzw. Eisen-III-hydroxid mit Eisen-II-salzen unter Zugabe von Alkalien zu Magnetit-Pigmenten umgesetzt.

Die Hitzebeständigkeit dieser Pigmente ist jedoch unzureichend, so daß bislang nur teure Mischphasenpigmente wie z.B. metall-II-haltige Ferrite (wie z.B. Kupfer/Mangan-Ferrite) eingesetzt werden können.

Gemäß dem 2-Stufen Verfahren sind $Fe_3O_4$-Pigmente mit sehr guten Farbeigenschaften herstellbar. Solche Pigmente zeichnen sich auch durch eine enge Teilchengrößenverteilung aus.

Der Magnetit ($Fe_3O_4$) kristallisiert im kubischen System mit Spinellstruktur im Strukturtyp $O_h7$. Die Ausbildung der Kristallflächen (100) führt zu würfelförmigen Kristallen, die (111)-Kristallflächen zu den oktaderischen Formen, wie sie bislang bei den Magnetitpigmenten beobachtet wurden. Bei unregelmäßig geformten Pigmentteilchen kommt es nicht zu der Ausbildung einer definierten Kristallfläche.

Aufgabe der Erfindung ist es, Eisenoxidschwarz-Pigmente zur Verfügung zu stellen, die bei den Herstellungsbeispielen von dampfgehärteten Baustoffen wie z.B. Kalksandstein oder Faserzement keine Farbveränderung zeigen.

Überraschenderweise wurde nun gefunden, daß bei Einsatz von $Na_2CO_3$ als Fällungsmittel und Fällungstemperaturen von 80°C bis zum Siedepunkt oder $NaOH/Na_2CO_3$-Gemischen als Fällmittel Eisenoxidschwarz-Pigmente nach dem 2-Stufen-Fällungsverfahren erhalten werden können, die ohne weitere Maßnahme die geforderten Autoklaven-Behandlung ohne Farbveränderung überstehen.

Diese Pigmente besitzen bei erwünschten blaustichigem Schwarzton eine niedrige spezifische Oberfläche von ca. 0,5-5 $m^2/g$ und weisen eine gute Dispergierbarkeit auf.

Gegenstand diese Erfindung sind somit hitzestabile Eisenoxidschwarz-Pigmente mit einer Beständigkeit gegen hydrothermale Behandlung an Luft bei Temperaturen von größer als 180°C und einer spezifischen Oberfläche nach BET von 0, bis 5 $m^2/g$. Die Bestimmung erfolgt dabei nach der Stickstoffmethode (DIN 66131).

Die Erfindung betrifft auch das Verfahren zur Herstellung der erfindungsgemäßen Eisenoxidschwarz-Pigmente.

Eine Suspension von alpha-FeOOH in einer Eisensalzlösung wird mit $Na_2CO_3$-Lösung bzw. $Na_2CO_3/NaOH$-Gemischen zur vollständigen Fällung der Eisensalze versetzt und bis zur vollständigen Umsetzung bei der Reaktionstemperatur von 70°C bis zum Siedepunkt gerührt. Dann wird unter Zufuhr von weiterer Natronlauge der pH-Wert auf Werte größer als 8,5 gestellt und eine Zeit lang nachgerührt.

Die erhaltenen Pigmente werden nach der üblichen Aufarbeitung (Filtration, Waschung und Trocknung) in Faserzement eingearbeitet und bei 180°C, 8 bar, 8 h lang oder bei 204°C, 16 bar, 4 h autoklaviert. Dabei ist die Pigmentierungshöhe 5 %. die Rezepturen sind bei H. Gundlach, "Dampfgehärtete Baustoffe", Wiesbaden-Berlin, 1973, S. 229 ff ausführlich beschrieben. Die ausgehärteten Faserzementplatten wurden visuell beurteilt.

Beispiel 1

39 l einer Suspension von alpha-FeOOH (55 h/l) in einer wäßrigen $FeSO_4$-Lösung (53 g/l( mit einem $Fe^{III}$:$Fe^{II}$-Verhältnis von 1,8 werden in einem 60 l Rührkessel unter Inertbedingungen ($N_2$) und Rühren (800 U/min) auf 90°C erhitzt und in 10 Minuten mit der zur Fällung nötigen $Na_2CO_3$-Menge (6,9 1; 210 g/l) versetzt. Anschließend wird 5 Stunden gerührt, danach wird der pH-Wert mit Natronlauge (400 g/l) auf pH 9,5 gestellt und weitere 4 Stunden gerührt. Der NaOH-Verbrauch beträgt 1,1 l. Bei geöffneter Apparatur wird eine Stunde ohne $N_2$ nachgerührt.

Nach Filtration und Waschen erfolgt die Trocknung bei 40°C.

Der erhaltene Magnetit ist würfelförmig mit abgeschrägten Kanten.

Teilchengröße:          1,5 μm

Spez. Oberfläche (BET)    1,2 m²/g.

Beispiel 2

40 l einer Suspension von alpha-FeOOH (53 g/l) in einer wäßrigen FeSO₄-Lösung (50 g/l) mit einem Fe$^{III}$:Fe$^{II}$-Verhältnis von 1,8 werden in einem 30 l Rührkessel unter Inertbedingungen (N₂) und Rühren (800 U/min) auf 70°C erhitzt und in 8 Minuten mit der zur Fällung benötigten Menge einer Mischung aus Na₂CO₃ (3400 ml; 207 g/l) und NaOH (2600 ml; 206 g/l) als wäßrige Lösung versetzt.

Anschließend wird in 60 Minuten auf 90°C erhitzt und 4 Stunden gerührt.

Bei geöffneter Apparatur wird eine Stunde ohne N₂ nachgerührt.

Nach Filtration und Waschen erfolgt die Trocknung bei 40°C.

Der erhaltene Magnetit zeigt eine Übergangsform zwischen Würfel und Rhombendodekaeder.

Teilchengröße:          0,5 μm

spez. Oberfläche (BET)    3,0 m²/g.

Beispiel 3a

Mit dem Magnetit-Pigment aus Beispiel 1 wurden Faserzementplatten hergestellt und bei 180°C, 8 bar, 8 h ausgehärtet.

Beispiel 3b

Mit dem Magnetit-Pigment aus Beispiel 2 wurden bei 204°C, 16 bar und 4 h Faserzementplatten hergestellt.

Vergleichsbeispiel 1a

Mit einem handelsüblichen blaustichigen Eisenoxidschwarz-Pigmente Bayferrox® 306 (Hersteller BAYER AG) wurden ebenfalls Faserzementplatten bei 80°C 8 bar und 8 h ausgehärtet.

Vergleichsbeispiel 1b

Mit demselben Pigment wie in Vergleichsbeispiel 1a wurden Faserzementplatten bei 204°C, 16 bar und 4 h ausgehärtet.

| Beispiel | visueller Farbeindruck |
|---|---|
| 3 a | tiefschwarz |
| 3 b | tiefschwarz |
| Vgbsp. 1a | braun-schwarz |
| Vgbsp. 1b | braun |

**Patentansprüche**

1. Hitzestabiles Eisenoxidschwarz-Pigment mit einer Beständigkeit gegen hydrothermale Behandlung an Luft bei Temperaturen von größer als 180°C und einer spezifischen Oberfläche nach BET von 0,5 bis 5 m²/g.

2. Verfahren zur Herstellung von hitzestabilen Eisenoxidschwarz-Pigmenten gemäß Anspruch 1 durch Umsetzung von FeOOH, Eisen-II-Salzen und Alkalien bei erhöhter Temperatur, dadurch gekennzeichnet, daß

die Fällung mit $Na_2CO_3$ bei Temperaturen zwischen 80°C und dem Siedepunkt durchgeführt wird.

3. Verfahren zur Herstellung von hitzestabilen Eisenoxidschwarz-Pigmenten gemäß Anspruch 1 durch Umsetzung von FeOOH, Eisen-II-salzen und Alkalien bei erhöhter Temperatur, dadurch gekennzeichnet, daß die Fällung mit $Na_2CO_3$-haltigen Alkalihydroxiden durchgeführt wid.

4. Verfahren gemäß einem der Ansprüche 2 oder 3, dadurch gekennzeichnet, daß nach der Reaktion zu $Fe_3O_4$ der pH-Wert auf Werte über 8,5 angehoben wird und eine Nachreaktion in 1 bis 10 h durchgeführt wird.

5. Verwendung der Eisenoxidschwarz-Pigmente gemäß einem oder mehrerer der Ansprüche 1 bis 4 zur Pigmentierung von Bau- und Anstrichstoffen, bevorzugt in Faserzement und Kalksandsteinen.

## Claims

1. A heat-stable iron oxide black pigment which is resistant to hydrothermal treatment in air at temperatures above 180°C and which has a specific BET surface of 0.5 to 5 m²/g.

2. A process for the production of the heat-stable iron oxide black pigments claimed in claim 1 by reaction of FeOOH, iron(II) salts and alkalis at elevated temperature, characterized in that precipitation is carried out with $Na_2CO_3$ at temperatures in the range from 80°C to the boiling point.

3. A process for the production of the heat-stable iron oxide black pigments claimed in claim 1 by reaction of FeOOH, iron(II) salts and alkalis at elevated temperature, characterized in that the precipitation is carried out with $Na_2CO_3$-containing alkali metal hydroxides.

4. A process as claimed in claim 2 or 3, characterized in that, after the reaction to $Fe_3O_4$, the pH value is raised to values above 8.5, followed by an after-reaction for 1 to 10 h.

5. The use of the iron oxide black pigments claimed in one or more of claims 1 to 4 for the pigmenting of building materials and paints, preferably in fibre-reinforced cement and lime-sand bricks.

## Revendications

1. Pigment noir d'oxyde de fer thermostable doué de stabilité au traitement hydrothermique à l'air à des températures dépassant 180°C et ayant une surface spécifique selon la méthode BET de 0,5 à 5 m²/g.

2. Procédé de production de pigments noirs d'oxyde de fer thermostables suivant la revendication 1 par réaction de FeOOH, de sels de fer-II et d'alcalis à une température élevée, caractérisé en ce qu'on conduit la précipitation avec du $Na_2CO_3$ à des températures comprises entre 80°C et le point d'ébullition.

3. Procédé de production de pigments noirs d'oxyde de fer thermostables suivant la revendication 1 par réaction de FeOOH, de sels de fer-II et d'alcalis à une température élevée, caractérisé en ce que la précipitation est conduite avec des hydroxydes alcalins contenant du $Na_2CO_3$.

4. Procédé suivant l'une des revendications 2 ou 3, caractérisé en ce que le pH est élevé à des valeurs dépassant 8,5 après la réaction de formation de $Fe_3O_4$ et une post-réaction est conduite en 1 à 10 heures.

5. Utilisation de pigments noirs d'oxyde de fer suivant une ou plusieurs des revendications 1 à 4 pour la pigmentation de matériaux de construction et d'enduits, de préférence dans du ciment fibreux et du grès calcaire.